# EUROPEAN PATENT APPLICATION

(11) **EP 3 730 352 A1**
(43) Date of publication of application: **28.10.2020**
(21) Application number: 17935514.4
(22) Date of filing: 20.12.2017
(51) Int. Cl.: B60R 21/00, B60W 30/06, G08G 1/16

(54) **PARKING CONTROL METHOD AND PARKING CONTROL DEVICE**

(71) Applicant: NISSAN MOTOR CO., LTD., Yokohama-shi, Kanagawa 221-0023 (JP)
(72) Inventor: YAMANAKA, Ryota, Atsugi-shi, Kanagawa 243-0123 (JP); SUZUKI, Yasuhiro, Atsugi-shi, Kanagawa 243-0123 (JP); HAYAKAWA, Yasuhisa, Atsugi-shi, Kanagawa 243-0123 (JP)
(74) Representative: Grünecker Patent- und Rechtsanwälte PartG mbB
(86) International application number: PCT/JP2017/045819
(87) International publication number: WO 2019/123587

(57) **Abstract**

The disclosure includes: performing parking control of moving a vehicle to a target parking position on the basis of an operation command acquired from an operator (M) located outside the vehicle; when the parking control to the target parking position is suspended and the vehicle leaves the target parking position, calculating a moving direction of the vehicle on the basis of a traffic direction in a passage for vehicles adjacent to the target parking position; and moving the vehicle in the calculated moving direction.

## Description

### [Technical Field]

The present invention relates to a parking control method and a parking control apparatus.

### [Background Art]

A technique for an operator to remotely operate a vehicle is known, in which when the vehicle is parked into a parking space, the vehicle is controlled to make a stop if an obstacle is detected (Patent Document 1).

### [Prior Art Document]

### [Patent Document]

[Patent Document 1] JP2008-74296A

### [Summary of Invention]

### [Problems to be solved by Invention]

In the above prior art, after the vehicle makes a stop due to the detection of an obstacle, the operator has to give an instruction or the like for the next traveling direction in order to park the vehicle into the next parking space, which may impose a burden on the operator.

A problem to be solved by the present invention is to alleviate the burden imposed on an operator by preliminarily moving a vehicle in a direction based on the traffic direction in a passage for vehicles even when a determination is once made that parking is not possible and the vehicle leaves a target parking position.

### [Means for solving problems]

The present invention solves the above problem through, when parking control to a target parking position is suspended and the vehicle leaves the target parking position, calculating a moving direction of the vehicle on the basis of a traffic direction in a passage for vehicles adjacent to the target parking position and moving the vehicle in the calculated moving direction.

### [Effect of Invention]

According to the present invention, even when a determination is once made that parking is not possible and the vehicle leaves the target parking position, the vehicle is preliminarily moved in a direction based on the traffic direction in the passage for vehicles and it is therefore possible to prevent the operator from giving an instruction or the like for the next traveling direction and alleviate the burden imposed on the operator.

### [Brief Description of Drawings]

FIG. 1 is a block diagram illustrating an example of a parking control system according to one or more embodiments of the present invention.
FIG. 2A is a diagram for describing a first detection scheme as an example of a detection method for the position of an operator.
FIG. 2B is a diagram for describing a second detection scheme as an example of a detection method for the position of an operator.
FIG. 2C is a diagram for describing a third detection scheme as an example of a detection method for the position of an operator.
FIG. 2D is a diagram for describing a fourth detection scheme as an example of a detection method for the position of an operator.
FIG. 3A is a diagram for describing a first detection scheme as an example of a detection method for an obstacle.
FIG. 3B is a diagram for describing a second detection scheme as an example of a detection method for an obstacle.
FIG. 4A is a diagram for describing the operation in a first rescue mode as an example of the operation in a rescue mode according to one or more embodiments of the present invention.
FIG. 4B is a diagram for describing the operation in a second rescue mode as an example of the operation in a rescue mode according to one or more embodiments of the present invention.
FIG. 4C is a diagram for describing the operation in a third rescue mode as an example of the operation in a rescue mode according to one or more embodiments of the present invention.
FIG. 4D is a diagram for describing the operation in a fourth rescue mode as an example of the operation in a rescue mode according to one or more embodiments of the present invention.
FIG. 4E is a diagram for describing the operation in a fifth rescue mode as an example of the operation in a rescue mode according to one or more embodiments of the present invention.
FIG. 5 is a flowchart illustrating an example of a control procedure executed by the parking control system according to one or more embodiments of the present invention.
FIG. 6 is a flowchart illustrating an example of a control procedure in a rescue mode according to one or more embodiments of the present invention.

### [Mode(s) for Carrying out the Invention]

Hereinafter, one or more embodiments of the present invention will be described with reference to the drawings.

In the embodiments, the present invention will be described by exemplifying a case in which the parking control apparatus according to the present invention is applied to a parking control system. One or more embodiments of the present invention will be described with reference to a configuration in which the parking control apparatus is equipped in a vehicle, but the parking control apparatus may also be applied to a portable operation terminal (equipment such as a smartphone or a PDA: Personal Digital Assistant) capable of exchanging information with an onboard apparatus. The parking control method according to the present invention can be used in the parking control apparatus, which will be described below.

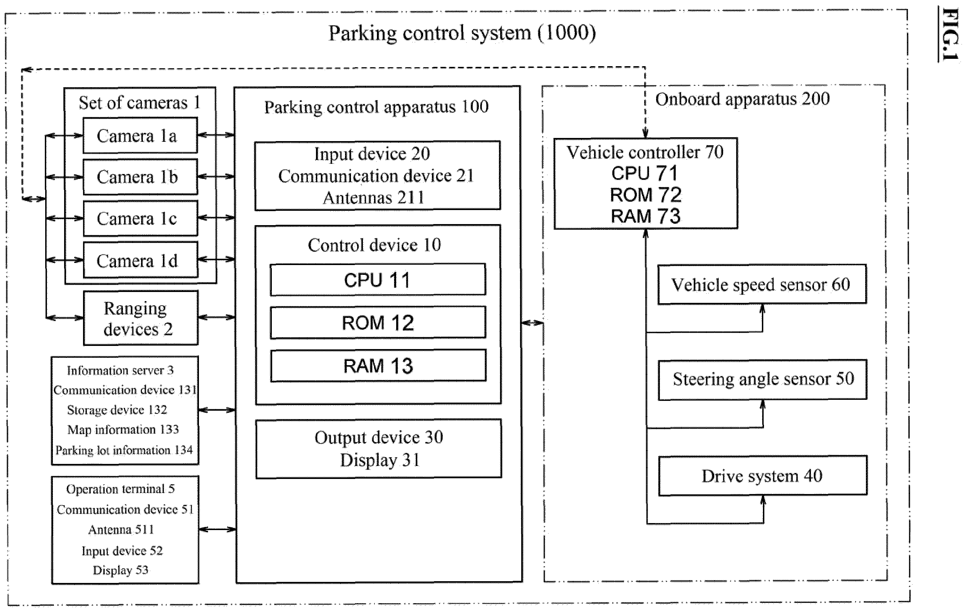

FIG. 1 is a block diagram of a parking control system 1000 including a parking control apparatus 100 according to one or more embodiments of the present invention. The parking control system 1000 according to one or more embodiments of the present invention includes a set of cameras 1, one or more ranging devices 2, an information server 3, an operation terminal 5, the parking control apparatus 100, and an onboard apparatus 200. The onboard apparatus 200 includes a vehicle controller 70, a drive system 40, a steering angle sensor 50, and a vehicle speed sensor 60. The parking control apparatus 100 according to one or more embodiments of the present invention controls an operation of moving (parking) a vehicle as the target of control into a parking space on the basis of an operation command that is input from the operation terminal 5.

The set of cameras 1 includes, for example, cameras 1a to 1d as illustrated. The cameras 1a to 1d are installed at the front part, right-side part, left-side part, and rear part of the vehicle, respectively. For example, the camera 1a, which is installed at or near the front bumper of the vehicle, captures an image ahead of the vehicle and outputs the image information to the parking control apparatus 100. The camera 1b, which is installed on the right side of the vehicle (e.g., on the right side of the front end of the vehicle), captures an image on the right side of the vehicle and outputs the image information to the parking control apparatus 100. The camera 1c, which is installed on the left side of the vehicle (e.g., on the left side of the front end of the vehicle), captures an image on the left side of the vehicle and outputs the image information to the parking control apparatus 100. The camera Id, which is installed at or near the rear bumper of the vehicle, captures an image behind the vehicle and outputs the image information to the parking control apparatus 100.

The one or more ranging devices 2 measure the distance from the vehicle to an object existing around the vehicle. Examples of the ranging devices 2 include radar devices, such as a millimeter-wave radar device, a laser radar device, and an ultrasonic radar device, and sonar devices. The number of the ranging devices 2 is not particularly limited and the ranging devices 2 may thus be two or more ranging devices 2. The ranging devices 2 may be installed at the same positions as the cameras 1a to 1d of the set of cameras 1 or may also be provided at different positions. Objects existing around the vehicle include obstacles, pedestrians, and other vehicles. The ranging devices 2 detect not only the distance to an object but also the presence or absence of the object and the position of the object with respect to the vehicle. The ranging devices 2 detect the presence or absence of an object, the distance to the object, and the position of the object and outputs the detection results to the parking control apparatus 100.

The information server 3 is an information provision apparatus provided on a network capable of communication. The information server includes a communication device 131 and a storage device 132. The storage device 132 includes readable map information 133 and parking lot information 134. The map information 133 includes positional information of parking facilities. The parking lot information 134 includes, for each parking facility, the location and identification number of each parking lot and positional information of passages, pillars, walls, storage spaces, etc. in the parking facility. The parking lot information 134 further includes the traffic direction of vehicles in a passage of the parking facility. The parking lot information 134 is not limited to the above information and may include, for each parking facility, information on available parking spaces as information on parking lots in which the vehicle can be parked. The parking control apparatus 100 and the operation terminal 5 can access the storage device 132 of the information server 3 to acquire various information items.

The operation terminal 5 is a portable computer that can be brought out to outside of the vehicle and has an input function and a communication function. The operation terminal 5 receives the input of an operation command made by an operator for controlling the driving (operation) of the vehicle for parking. The driving includes operations for parking (operations for entering a parking space and exiting the parking space). The operator inputs instructions via the operation terminal 5. The instructions include an operation command for execution of parking. The operation command includes information on the execution/stop of parking control, selection/change of a target parking position, and selection/change of a parking route and other information necessary for parking. The operator can also make the parking control apparatus 100 recognize the instructions including the operation command without using the operation terminal 5, such as by a gesture of the operator (i.e., the operator can input such instructions to the parking control apparatus 100 without using the operation terminal 5, such as by a gesture).

The operation terminal 5 includes a communication device and is capable of exchanging information with the parking control apparatus 100 and the information server 3. The operation terminal 5 transmits the operation command, which is input outside the vehicle, to the parking control apparatus 100 via a communication network and inputs the operation command to the parking control apparatus 100. The operation terminal 5 communicates with the parking control apparatus 100 using signals including a unique identification code. The operation terminal 5 includes a display 53. The display 53 presents an input interface and various information items. When the display 53 is a touch panel-type display, it has a function of receiving the operation command. The operation terminal 5 may be portable equipment, such as a smartphone or a PDA: Personal Digital Assistant, in which applications are installed for receiving an input of the operation command used in the parking control method according to one or more embodiments of the present invention and transmitting the operation command to the parking control apparatus 100.

The vehicle controller 70 is a controller that controls driving of the vehicle. Examples of the vehicle controller 70 include a computer and an electronic control unit (ECU). The vehicle controller 70 includes a ROM 72 that stores a vehicle drive control program, a CPU 71 as an operation circuit that executes the program stored in the ROM 72 to serve as a drive control device, and a RAM 73 that serves as an accessible storage device. The target steering angle and target speed of the vehicle are input from the parking control apparatus 100 to the vehicle controller 70, and the detection value from the steering angle sensor 50 and the detection value from the vehicle speed sensor 60 are input to the vehicle controller 70. When executing the control of parking the vehicle, the vehicle controller 70 controls the operation of the drive system 40 on the basis of the target steering angle and the target speed which are input to the parking control apparatus 100. The vehicle controller 70 outputs the detection value from the steering angle sensor 50 and the detection value from the vehicle speed sensor 60 to the parking control apparatus 100. The target steering angle and target speed of the vehicle, which are input from the parking control apparatus 100, will be described later.

The drive system 40 operates the vehicle to move (travel) from the current position to the target parking position by driving based on the control command signal acquired from the parking control apparatus 100 via the vehicle controller 70. The steering device (not illustrated) according to one or more embodiments of the present invention is a drive mechanism that moves the vehicle in the right or left direction. The drive system 40 includes an EPS motor. The EPS motor acquires the control command signal from the parking control apparatus 100 via the vehicle controller 70. Then, the EPS motor controls the steering amount by driving a power steering mechanism included in the steering of the steering device on the basis of the acquired control command signal and controls the operation when moving the vehicle to the target parking position. The control content and operation scheme for parking the vehicle are not particularly limited, and schemes known at the time of filing the present application can be appropriately applied.

The steering angle sensor 50, which is installed inside the steering column, for example, detects the rotation angle of the steering wheel and outputs the detected value to the parking control apparatus 100 via the vehicle controller 70. The vehicle speed sensor 60 calculates the vehicle speed of the vehicle from the wheel speed detected by a wheel-side sensor (not illustrated) that detects the rotational speed of the wheel, and outputs the detected value to the parking control apparatus 100 via the vehicle controller 70.

The parking control apparatus 100 according to one or more embodiments of the present invention includes a control device 10, an input device 20, and an output device 30. These components of the parking control apparatus 100 are connected to one another via a controller area network (CAN) or other onboard LAN to mutually exchange information. The input device 20 includes a communication device 21. The communication device 21 receives the operation command transmitted from the external operation terminal 5 and inputs the received operation command to the input device 20. The subject who inputs the operation command to the external operation terminal 5 may be a person (a user, a passenger, a driver, or a worker of a parking facility). The input device 20 transmits the received operation command to the control device 10. The output device 30 includes a display 31. When an occupant (driver or passenger) is present in the vehicle, the output device 30 can notifies the occupant in the vehicle of the parking control information via the display 31. Additionally or alternatively, the output device 30 can transmit the parking control information to the operation terminal 5 and notify the operator carrying the operation terminal 5 of the parking control information via the display 53 of the operation terminal 5. The display 31 according to one or more embodiments of the present invention is a touch panel-type display having an input function and an output function. When the display 31 has an input function, it serves as the input device 20. Even when the vehicle is controlled based on the operation command which is input from the operation terminal 5, an occupant (driver or passenger) can input the operation command, such as a command for emergency stop, via the input device 20.

The control device 10 of the parking control apparatus 100 according to one or more embodiments of the present invention is a computer for parking control including a ROM 12 that stores a parking control program, a CPU 11 as an operation circuit that executes the program stored in the ROM 12 to serve as the parking control apparatus 100 according to one or more embodiments of the present invention, and a RAM 13 that serves as an accessible storage device.

The parking control program according to one or more embodiments of the present invention is a program for performing the parking control of moving the vehicle to the target parking position on the basis of the operation command transmitted from the external operation terminal 5. The parking control apparatus 100 outputs the target speed and target steering angle of the vehicle, which are calculated by the program, to the vehicle controller 70. The vehicle controller 70 operates the drive system 40 in accordance with the target speed and target steering angle, and the vehicle can thereby move along the parking route at an appropriate speed to park at the target parking position.

Additionally or alternatively, the parking control program according to one or more embodiments of the present invention is a program for moving the vehicle in a direction in which the vehicle leaves the target parking position when the vehicle cannot be parked at the target parking position for some reason while moving to park at the target parking position. For example, when the set of cameras 1 or the like detects an obstacle on or near the parking route, the parking control apparatus 100 suspends the parking control. Then, to allow the operator to select whether or not the vehicle control should transition from the parking control to a rescue mode, the parking control apparatus 100 transmits to the operation terminal 5 information that the parking control will be suspended and information with which the operator can select the rescue mode.

The rescue mode refers to a so-called return mode in which when the vehicle is put into a situation that the vehicle cannot be parked at the target parking position during execution of the parking control to the target parking position, the parking control is suspended and the vehicle is moved to a given position separated from the target parking position. Specific processing after transition to the rescue mode will be described later. In the above-described example, when the operator touches a button on the screen for executing the rescue mode displayed on the screen of the display 53 of the operation terminal 5, operation command information for executing the rescue mode is input as an operation command for executing the rescue mode to the parking control apparatus 100 via the communication network, and the program of the rescue mode is executed.

The parking control apparatus 100 according to one or more embodiments of the present invention is a remote control-type apparatus that receives the operation command from outside and controls the movement of the vehicle to park the vehicle into a given parking space. Occupants of the vehicle may be located outside the vehicle interior or may also be located inside the vehicle interior.

The control device 10 of the parking control apparatus 100 according to one or more embodiments of the present invention has functions of executing a target parking frame setting process, a parking start position setting process, a current position estimation process, an operator position detection process, a recognition process for a passage for vehicles, and a parking route generation process as the functions of executing the above-described parking control. In addition, the control device 10 has functions of executing an obstacle detection process, a recognition process for a passage for vehicles, a deceleration process, an operator position detection process, and a rescue route generation process as the functions of executing the above-described rescue mode. The control device 10 further has functions of executing a route following process and a target speed generation process to move the vehicle along the parking route generated by the parking route generation process or along the rescue route generated by the rescue route generation process. The rescue route will be described later. Each of the above processes is executed by cooperation of software for implementing the process and the above-described hardware. These processes will be described below.

First, the functions of executing the parking control will be described. The target parking frame setting process will be described. The control device 10 sets a parking frame for parking the vehicle by automated (autonomous) driving (referred to as a target parking frame, hereinafter). The control device 10 detects parking frames in the parking lot from the images captured by the set of cameras 1. For example, the control device 10 generates an overhead view image from the images captured by the set of cameras 1 and detects frame line candidates that consist each parking frame from the overhead view image. Then, the control device 10 determines whether or not the detected frame line candidates satisfy determination conditions for the interval with another frame line, the relative angle to another frame line, the length, etc., and detects spaces defined by the frame line candidates satisfying the above determination conditions as the parking frames. The present invention is not limited to generating the overhead view image from the images captured by the set of cameras 1 to detect the parking frames from the overhead view image, and information on the parking frames may be acquired, for example, through communication with outside of the vehicle, that is, so-called road-to-vehicle communication or vehicle-to-vehicle communication.

Here, the automated (autonomous) driving refers to driving in which the parking control apparatus 100, rather than the driver, performs the steering operation of the steering device, the accelerator operation, and the brake operation in an automated (autonomous) manner via the vehicle controller 70. The parking control apparatus 100 is not limited to a type of performing all the operations for the driving control of the vehicle in an automated (autonomous) manner and may also be of a semiautomated (semiautonomous) type in which the steering operation is performed in an automated (autonomous) manner while the driver performs the accelerator/brake operation. In the latter case, for example, the driver gets on the vehicle and performs the accelerator/brake operation, and a passenger of the vehicle other than the driver or a worker of the parking facility operates the operation terminal 5.

Then, the control device 10 detects spaces into which parking is possible (referred to as available parking spaces, hereinafter) from among the detected parking frames. For example, on the basis of the ranging information (reflection point information) from the ranging devices 2, the control device 10 determines whether or not an obstacle is present in the detected parking frames or the routes when parking into the parking frames. Then, the control device 10 detects parking frames with no obstacle as the available parking spaces. The present invention is not limited to detecting the available parking spaces on the basis of the ranging information from the ranging devices 2, and the available parking spaces may also be detected, for example, from images captured by the set of cameras 1 or a camera installed in the parking lot. Additionally or alternatively, information on the available parking spaces may be acquired, for example, from the parking lot information 134 by accessing the information server 3.

Then, the control device 10 detects a parking space recommended for the driver and passengers of the subject vehicle (referred to as a recommended parking space, hereinafter) from among the available parking spaces and presents the recommended parking space to the driver and passengers of the subject vehicle. For example, the control device 10 transmits information on the recommended parking space to the operation terminal 5 and controls the display 53 of the operation terminal 5 to display the information on the recommended parking space. Additionally or alternatively, the control device 10 controls the display 31 of the output device 30 to display information on the recommended parking space. When there are two or more available parking spaces as the above, the control device 10 determines an available parking space to which the required time when parking into the available parking space is the shortest, for example, as the recommended parking space. Additionally or alternatively, for example, the control device 10 determines an available parking space closest to the gaze point of the driver of the subject vehicle as the recommended parking space.

Then, the control device 10 receives the designation of a target parking frame made by the driver or a passenger of the subject vehicle and sets a target parking position at which the vehicle is parked. The driver or passenger of the subject vehicle can designate the target parking frame, such as by touching an icon of the recommended parking space displayed on the touch panel-type display 53 of the operation terminal 5 or moving a cursor on the display to the icon of the recommended space with a cursor operation key displayed on the display 53 and operating an enter button. The designation of the target parking frame is not limited to being designated by a person, and the parking facility side may automatically designate the target parking frame. For example, the display 53 of the operation terminal 5 may be configured to display one recommended parking space that is designated on the parking facility side, and the driver or passenger of the subject vehicle may designate the recommended parking space. The control device 10 executes such a process to set the target parking position as a position at which the vehicle is parked.

The parking start position setting process will then be described. To calculate a parking route, which will be described later, the control device 10 sets a position at which parking control is started (referred to as a parking start position, hereinafter). For example, when the user operates a start switch provided on the operation terminal 5 for starting the parking control, the current position of the vehicle at that time is set as the parking start position. The method of specifying the current position is not particularly limited. For example, the control device 10 may access the information server 3 via antennas 211 to calculate the current position from the map information 133 or may use the global positioning system (GPS) to measure the current position of the vehicle.

The current position estimation process will then be described. To move the vehicle along the parking route or rescue route, which will be described later, the control device 10 estimates the current position of the vehicle. For example, the control device 10 measures the current position of the vehicle using the GPS, acquires the current position through the road-to-vehicle communication, or calculates the current position on the basis of the steering amount of the steering and the accelerator operation amount.

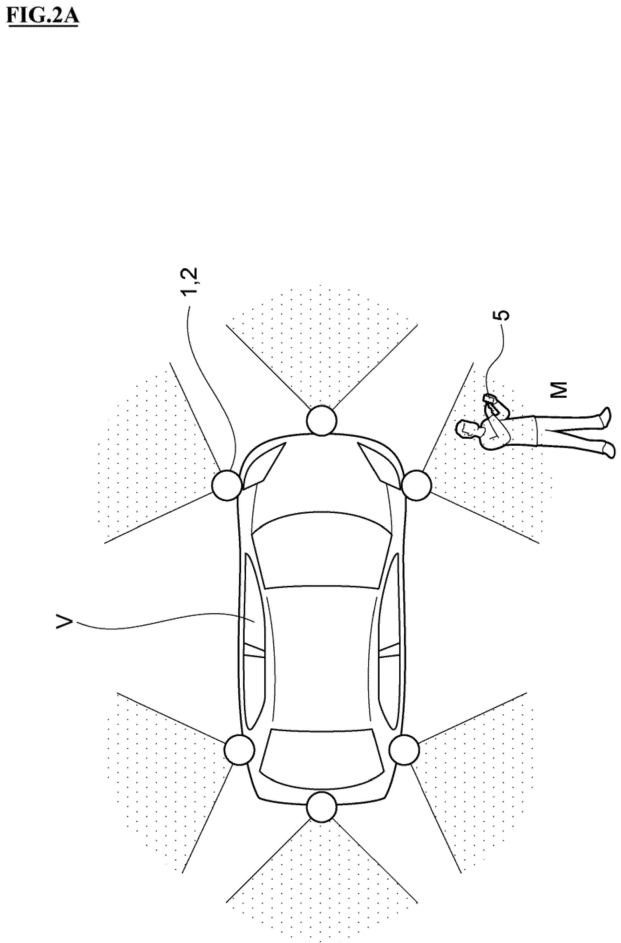

The operator position detection process will then be described with reference to FIG. 2A to FIG. 2D. The control device 10 detects the position of the operator carrying the operation terminal 5. The position of the operator is used for generation of the parking route or rescue route. The position of the operator includes information on the position on the movement plane of the vehicle and information on the height position. For example, the control device 10 detects the position of the operation terminal 5 carried by the operator and calculates the position of the operator on the basis of the position of the operation terminal 5. The operation terminal 5 may be provided at a predetermined position or may also be carried by the operator. When the operation terminal 5 is provided at a predetermined position, the operator moves to the position at which the operation terminal 5 is provided, and uses the operation terminal 5 at that position. In these cases, the control device 10 can determines the position of the operation terminal 5 as the position of the operator.

FIG. 2A is a diagram to describe detecting the position of an operator M on the basis of the detection results from the multiple ranging devices 2 provided in a vehicle V and/or the images captured by the set of cameras 1. The control device 10 detects the position of the operator M on the basis of the images captured by the cameras 1a to 1d. Additionally or alternatively, the control device 10 detects the two-dimensional position and/or three-dimensional position of the operator M on the basis of the detection results from the ranging devices 2.

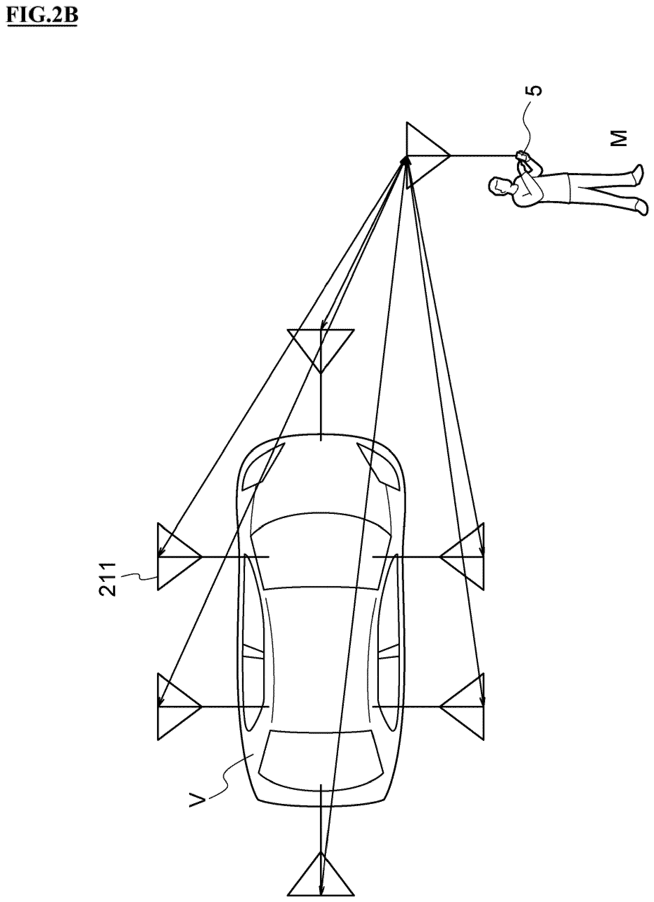

FIG. 2B is a diagram to describe detecting the position of the operation terminal 5 or the position of the operator M carrying the operation terminal 5 on the basis of the communication radio waves between the multiple antennas 211 provided at different positions of the vehicle V and the operation terminal 5. When the multiple antennas 211 communicate with one operation terminal 5, the intensity of the received radio wave of each antenna 211 is different. The control device 10 calculates the position of the operation terminal 5 on the basis of the intensity difference between the received radio waves of the antennas 211. Additionally or alternatively, the control device 10 calculates the two-dimensional position and/or three-dimensional position of the operation terminal 5 or the operator M from the intensity difference between the received radio waves of the antennas 211.

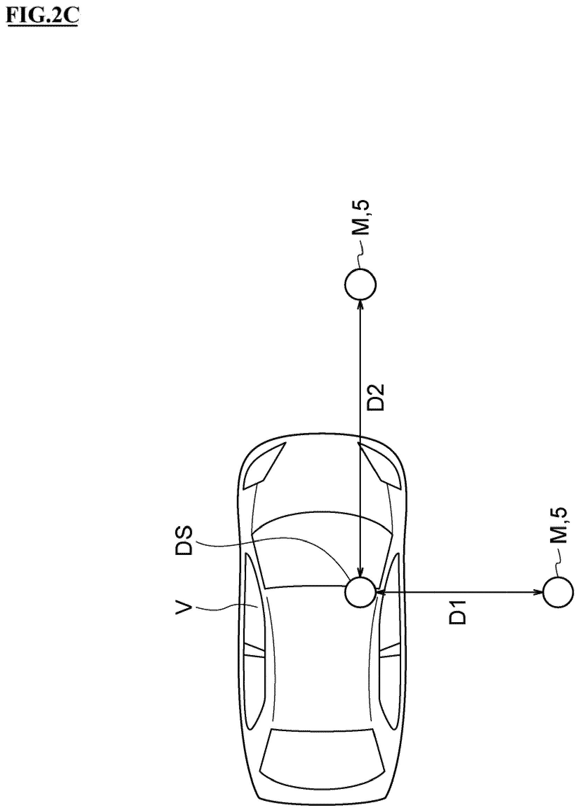

FIG. 2C is a diagram to describe preliminarily designating a predetermined position (direction/distance: D1, D2) with respect to the driver seat DS of the vehicle as the operating position of the operator M or as the position at which the operation terminal 5 is installed. For example, when the operator M temporarily stops the vehicle V at a designated position and gets off the vehicle V to operate the operation terminal 5 provided at the predetermined position, the control device 10 calculates the initial position of the operator M with respect to the vehicle V or the initial position of the terminal 5, which is carried by the operator M, with respect to the vehicle V.

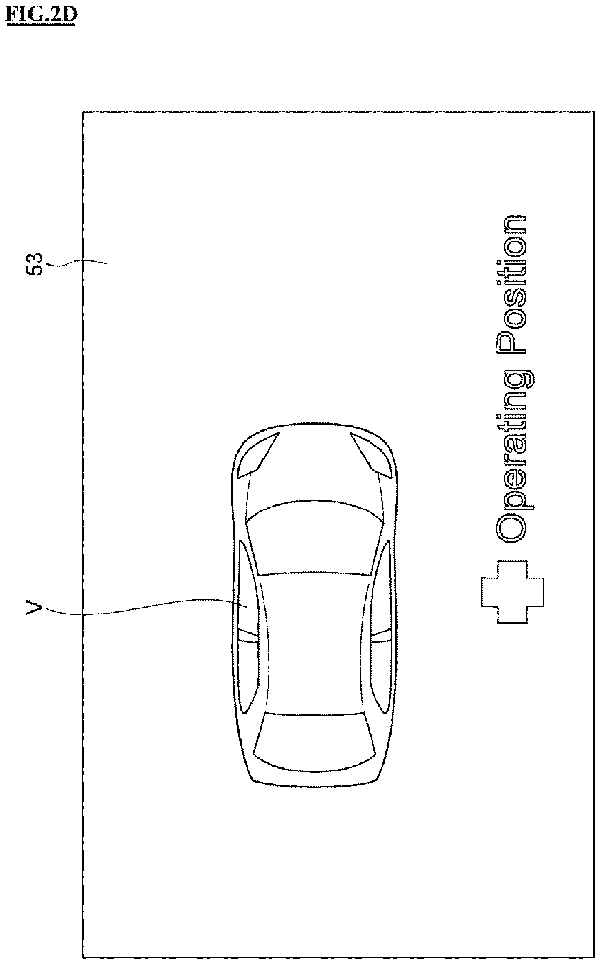

FIG. 2D is a diagram to describe displaying image information representing the calculated operating position (a position at which the operator M stands: operation position) on the display 53 of the operation terminal 5. When detecting the position of the operator, the control device 10 controls the display 53 of the operation terminal 5 to display the image as illustrated in FIG. 2D. This display control may be executed by an application installed on the operation terminal 5 side or may also be executed based on a command from the control device 10.

The parking route generation process will then be described. The control device 10 generates a route from the parking start position to the target parking position (referred to as a parking route, hereinafter) as a route for parking the vehicle into the target parking frame. The shape of the parking route is not particularly limited, and the parking route may be a straight route, a curved route, or a route of the combination thereof. When the vehicle turns for parking before reaching the target parking position, the parking route includes a route from the parking start position to the position of turn for parking and a route from the position of turn for parking to the target parking position. For example, the control device 10 calculates as the parking route a route obtained by combining a curved route from the parking start position to the position of turn for parking and a straight route from the position of turn for parking to the target parking position. The present invention is not limited to calculating the parking route, and the parking route determined for each parking frame may be preliminarily stored in a memory (e.g., the ROM 12), for example, and the control device 10 may read the parking route from the memory. Additionally or alternatively, for example, the control device 10 may acquire information on a predetermined parking route through road-to-vehicle communication or vehicle-to-vehicle communication to generate the parking route. Additionally or alternatively, the parking route can be generated through setting a halfway position between the parking start position and the target parking position, generating a parking route from the parking start position to the halfway position, and generating a parking route from the halfway position to the target parking position when approaching the halfway position. Additionally or alternatively, when the surrounding situation changes or when the position of the vehicle deviates from the parking route, the parking route can be generated again and changed during the control.

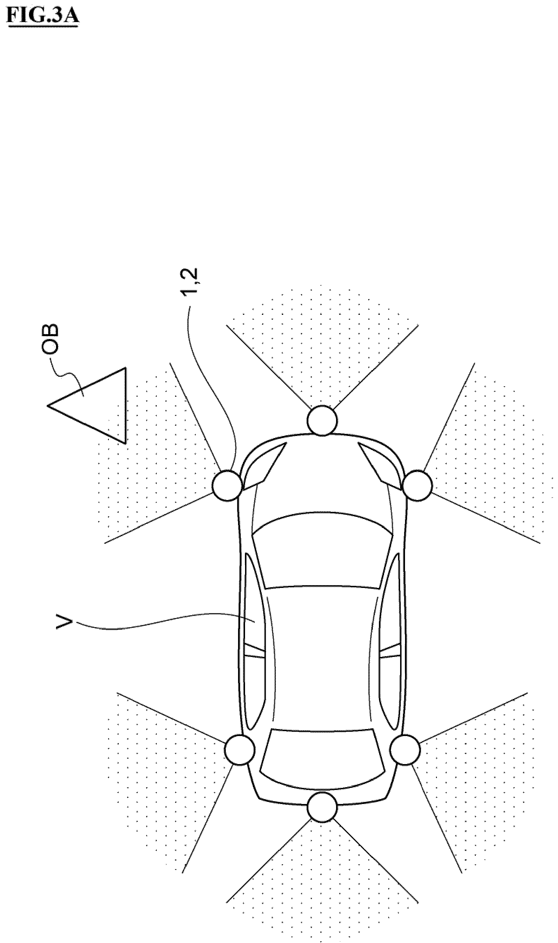

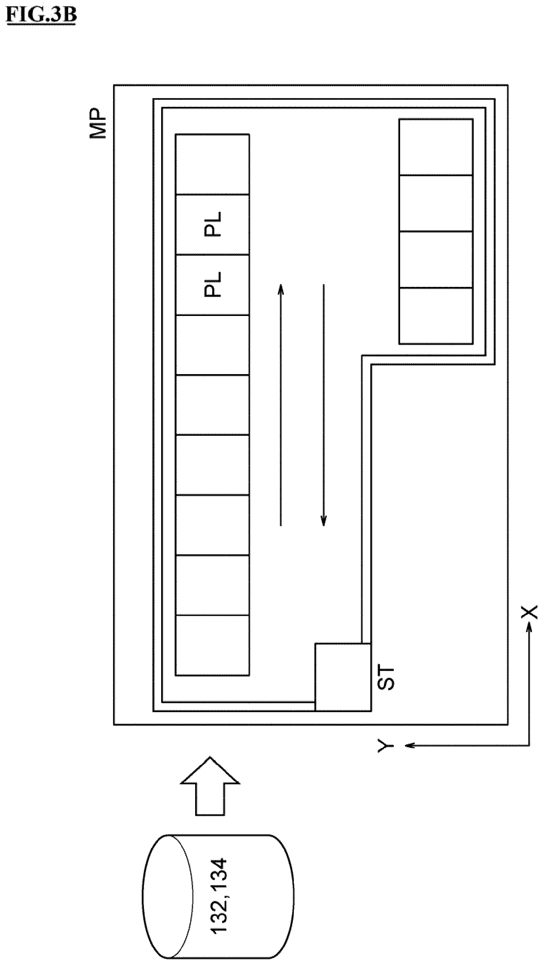

The function of executing the rescue mode will then be described. The obstacle detection process will be described with reference to FIGS. 3A and 3B. The control device 10 detects obstacles existing outside the vehicle. The obstacles include structures such as walls and pillars of a parking lot, installation objects around the vehicle, pedestrians, other vehicles, parked vehicles, and other similar objects.

FIG. 3A is a diagram to describe detecting an obstacle OB existing around the vehicle V. As illustrated in FIG. 3A, the control device 10 detects the obstacle OB on the basis of the detection results from the multiple ranging devices 2 provided in the vehicle and/or the images captured by the set of cameras 1. The detection results from the ranging devices 2 include the presence or absence of the obstacle OB, the position of the obstacle OB, the size of the obstacle OB, and the distance to the obstacle OB. Additionally or alternatively, the control device 10 performs image processing on the images captured by the cameras 1a to 1d thereby to detect the presence or absence of the obstacle OB, the position of the obstacle OB, the size of the obstacle OB, and the distance to the obstacle OB. The detection of an obstacle is not limited to using the above-described method and may be performed, for example, using a motion stereo technique with the cameras 1a to 1d.

FIG. 3B is a diagram for describing a method of detecting obstacles including structures such as walls and pillars of a parking lot. As illustrated in FIG. 3B, the control device 10 accesses the storage device 132 of the information server 3 to acquire the parking lot information 134. The parking lot information 134 includes information on structures such as walls and pillars of a parking lot, and the control device 10 therefore detects obstacles including structures on the basis of the parking lot information 134. In FIG. 3B, a specific floor map MP of an hourly parking lot ST is illustrated as the parking lot information 134 and, in the floor map MP, the position of each parking lot PL is represented, for example, by an X coordinate and a Y coordinate.

In one or more embodiments of the present invention, the detection result by the obstacle detection process is used as a trigger for transition from the parking control to the rescue mode, but the present invention is not limited to this. The control device 10 can continuously acquire the detection result of an obstacle and use the detection result for other processes. For example, the control device 10 may use the detection result of an obstacle in the course of setting the target parking position, may use the detection result of an obstacle in the course of calculating the parking route, or may use the detection result of an obstacle in the course of calculating the rescue route, which will be described later.

The recognition process for a passage for vehicles will then be described. The control device 10 recognizes a passage for vehicles in the parking facility. Specifically, the control device 10 detects the presence or absence of a passage for vehicles and the traffic direction in the passage for vehicles. The passage for vehicles refers to a passage for a vehicle to move through a parking facility and is a passage adjacent to each parking lot (also referred to as a parking frame) provided in the parking facility. The vehicle moves from the passage for vehicles toward a parking lot thereby to enter the parking lot and is parked in the parking lot. On the contrary, the vehicle starts moving (forward or backward) from the parking lot toward the passage for vehicles thereby to exit the parking lot. Thus, when entering the parking lot, the vehicle is traveling in the passage for vehicles; therefore, by detecting and recording the traveling direction in the passage for vehicles at that time, the traffic direction in the passage for vehicles adjacent to the parking lot can be determined when exiting the parking space. The traffic direction in a passage for vehicles includes information on whether the passage for vehicles is one-way or two-way traffic, and the passage for vehicles can therefore be defined in accordance with the traffic rules in the parking facility such that, for example, the passage for vehicles is one-way traffic and the traffic direction in the passage for vehicles is the direction from north to south. The method of defining the traffic direction in a passage for vehicles is not particularly limited to the method of using north, south, east, and west. For example, when the passage for vehicles is two-way traffic, the traffic direction in the passage for vehicles may be defined as left-hand traffic or right-hand traffic. Additionally or alternatively, when a map of the parking facility can be acquired, information on the traffic direction in a passage for vehicles included in the map information can be used.

The method of recognizing a passage for vehicles will be described. For example, when a map of the parking facility is preliminarily stored as the parking lot information 134 in a memory such as the ROM 12, the control device 10 acquires the map of the parking facility from the memory and detects the traffic direction in each of a plurality of passages for vehicles provided in the parking facility. Additionally or alternatively, for example, the control device 10 accesses the storage device 132 of the information server 3 and acquires the parking lot information 134, as illustrated in FIG. 3B. The parking lot information 134 includes information regarding the traffic direction in a passage for vehicles as information indicating the moving direction of the vehicle in the parking facility. The control device 10 recognizes the passage for vehicles on the basis of the parking lot information 134. In FIG. 3B, a specific floor map MP of an hourly parking lot ST is illustrated as the parking lot information 134, and the floor map MP includes information as to whether the passage for vehicles is two-way traffic or one-way traffic and information on the traffic direction in each passage.

The method of recognizing a passage for vehicles is not limited to the method of acquiring the information which is preliminarily stored in a memory such as the ROM 12 or the information server 3, and the control device 10 can recognize the passage for vehicles while the vehicle is moving through the parking facility. For example, the control device 10 can recognize the traffic direction in a passage for vehicles by detecting a mark or a white line painted on the passage for vehicles for indication of the moving direction of vehicles from the images captured by the set of cameras 1. Additionally or alternatively, when the captured images include a guide display plate indicating the moving direction of vehicles, the control device 10 can detect a passage for vehicles and the traffic direction in the passage.

The deceleration process will then be described. When detecting an obstacle while the vehicle is moving along the parking route toward the target parking position, the control device 10 forcibly decelerates the vehicle to make a stop in order to prevent the vehicle from contacting the obstacle. For example, even when the target speed moderately decreases as the vehicle approaches the target parking position in the parking control, the control device 10 increases the rate of deceleration and forcibly controls the vehicle to make a stop. Also when the parking route includes a position of turn for parking and an obstacle is detected while the vehicle is moving toward the position of turn for parking, the control device 10 controls the vehicle to make a stop.

The operator position detection process will then be described. The operator position detection process in the rescue mode is the same process as the above-described operator position detection process in the parking control, and the description will be borrowed herein.

The rescue route generation process will then be described. The rescue route refers to a route for the vehicle to leave the target parking position upon transition to the rescue mode. The control device 10 generates an evacuation route (referred to as a rescue route, hereinafter) as a route for the vehicle to move from the position at which the vehicle makes a stop to the target position (referred to as a rescue position, hereinafter) to which the vehicle moves, on the basis of the traffic direction in a passage for vehicles adjacent to the target parking position. The passage for vehicles adjacent to the target parking position refers to a passage for vehicles that is provided in a direction in which the vehicle can enter and exit the target parking position with reference to the target parking position. The shape of the rescue route is not particularly limited, and the rescue route may be a straight route, a curved route, or a route of a combination thereof. The control device 10 takes into account the detection result of an obstacle and the positional information of the operator to generate the rescue route which allows the vehicle to move safely to the rescue position. Specific examples of the rescue route will be described later.

The route following process and the target speed generation process, which are processes for moving the vehicle along the parking route or the rescue route, will then be described. After generating the parking route or the rescue route, the control device 10 calculates a target steering angle and a target speed in order to move the vehicle along any of these routes. The control device 10 outputs the calculated target steering angle and target speed to the vehicle controller 70. When an obstacle is detected during execution of the parking control, the control device 10 forcibly reduces the target speed by the deceleration process. Methods of calculating the target steering angle and the target speed are not particularly limited, and schemes known at the time of filing the present application can be appropriately applied.

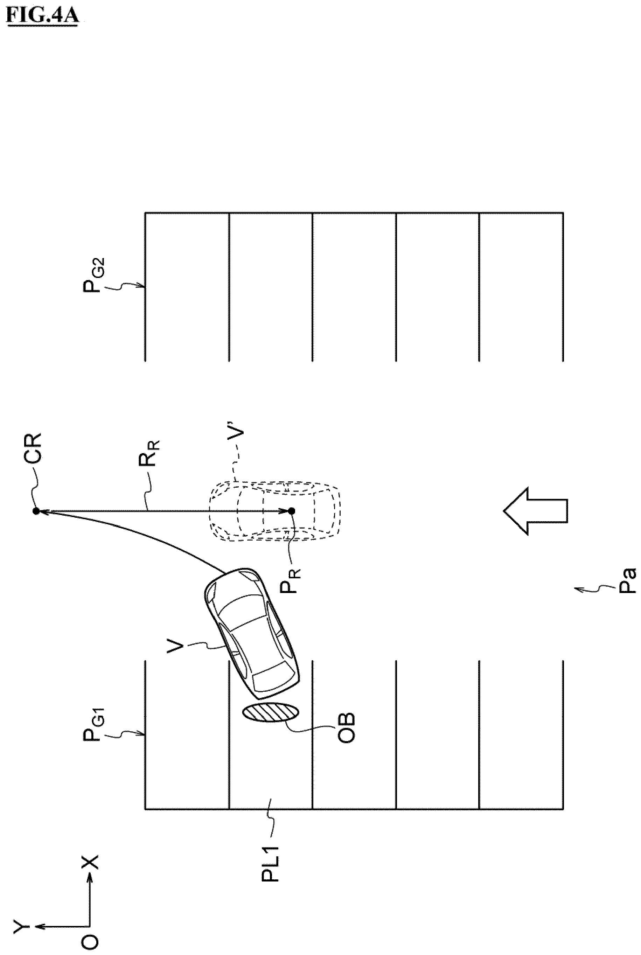

Examples of the operation in the rescue mode according to one or more embodiments of the present invention will then be described with reference to FIGS. 4A to 4E. FIGS. 4A to 4E are diagrams each illustrating an example of the operation in the rescue mode. FIGS. 4A to 4E illustrate scenes in which an obstacle OB is detected while the parking control apparatus 100 is executing the parking control for parking the vehicle V backward into a parking lot PL1. In these scenes, the control device 10 determines that the vehicle V cannot be parked into the parking lot PL1 and controls the display 53 of the operation terminal 5 to present information that enables the transition to the rescue mode in order to allow the operator of the operation terminal 5 to select whether or not to transition to the rescue mode. It is assumed that the operator selects the rescue mode and presses the enter button of the operation terminal 5.

In FIGS. 4A to 4E, a parking lot group P_{G1} is composed of a plurality of parking lots including a parking lot PL1, and these parking lots are adjacent to each other. In addition, another parking lot group P_{G2} is provided on the opposite side of the parking lot group PG1 across a passage for vehicles Pa so as to face the parking lot group P_{G1}. For example, in the case in which a parked vehicle is present in the parking lot PL1, when the vehicle starts moving (forward or backward) from the parking lot PL1, the vehicle exits to the passage for vehicles Pa. Moreover, for example, in the case in which a parked vehicle is present in a parking lot that constitutes the parking lot group P_{G2}, when the vehicle starts moving (forward or backward) from the parking lot, the vehicle exits to the passage for vehicles Pa.

In the example of FIG. 4A, after transition to the rescue mode, first, the control device 10 recognizes the passage for vehicles Pa. In the example of FIG. 4A, the control device 10 detects that the passage for vehicles Pa is one-way traffic and that the traffic direction in the passage for vehicles Pa is a positive direction along the y-axis. For example, the control device 10 recognizes the passage for vehicles Pa on the basis of the parking facility information which is preliminarily stored in a memory.

Then, the control device 10 sets a rescue position P_{R} at a position on the passage for vehicles Pa that is a position at which the traveling direction of the vehicle V is approximately parallel to the traffic direction in the passage for vehicles Pa (the positive direction of the y-axis). The control device 10 generates a rescue route R_{R} from the current position of the vehicle V to the rescue position P_{R}. In the example of FIG. 4A, the control device 10 generates a route along which the vehicle V turns to the left side while moving forward and reaches a position of turn CR and a route along which the vehicle V moves backward from the position of turn CR to reach the rescue position P_{R}. The control device 10 calculates a target steering angle and a target speed for moving the vehicle V along the rescue route R_{R} to the rescue position P_{R} and outputs the calculated target steering angle and target speed to the vehicle controller 70. The direction when the vehicle V moves along the rescue route R_{R} to the rescue position P_{R} is the moving direction. The moving direction includes a traveling direction in which the vehicle V moves forward when the vehicle V completes moving along the rescue route R_{R} to the rescue position P_{R}. The vehicle V can move to the rescue position P_{R} thereby to evacuate from the obstacle OB and the parking lot PL1. In the example of FIG. 4A, the state in which the vehicle V makes a stop with its front part facing a direction along the traffic direction in the passage for vehicles Pa is indicated as a vehicle V'. This state is as a result of the vehicle V moving to the rescue position P_{R}.

In the example of FIG. 4A, the vehicle V is moved by the vehicle controller 70 to a location separated from the obstacle OB and the parking lot PL1 and makes a stop in a state in which the traveling direction is along the traffic direction in the passage for vehicles Pa. Through this operation, when the operator of the operation terminal 5 gets on and drives the vehicle V', the operator can drive the vehicle V' to move forward along the passage for vehicles Pa to the next available parking space without any operation such as a drive operation of changing the direction of the vehicle V'. In the example of FIG. 4A, the rescue route R_{R} includes the position of turn CR, but the rescue route R_{R} is not limited to including the position of turn CR. For example, the rescue route R_{R} may be a route from the current position of the stopped vehicle V to the position of turn CR.

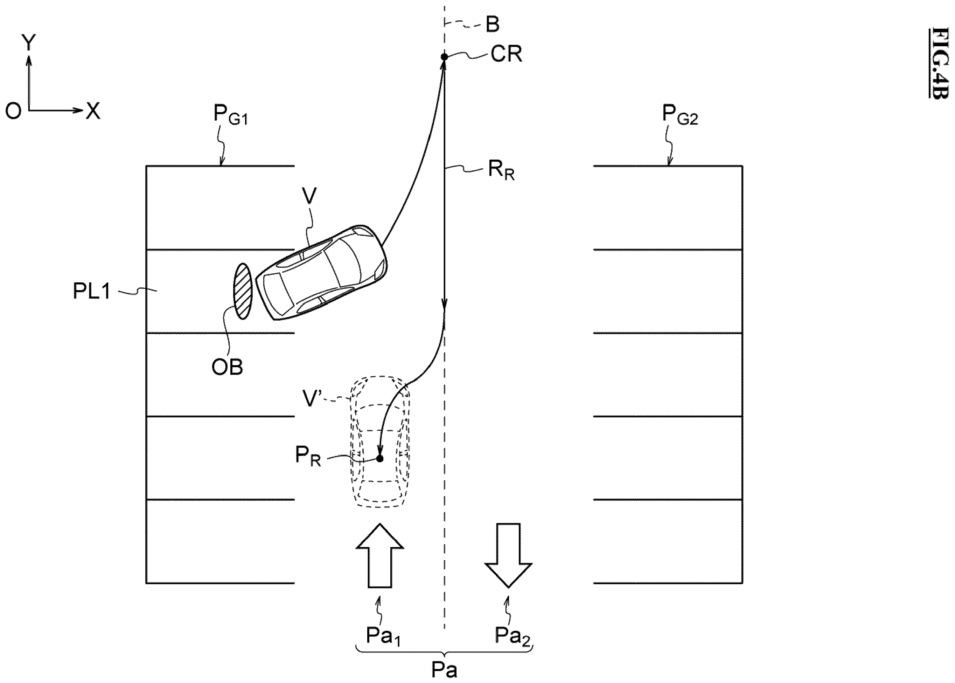

FIG. 4B is different from FIG. 4A in that the passage for vehicles Pa is two-way traffic as compared with the passage for vehicles Pa illustrated in FIG. 4A. In FIG. 4B, the passage for vehicles Pa is composed of two passages: a passage for vehicles Pa1 and a passage for vehicles Pa2 with a boundary line B interposed between the two passages. The passage for vehicles Pa is left-hand traffic. Specifically, the traffic direction in the passage for vehicles Pa1 is a positive direction along the y-axis while the traffic direction in the passage for vehicles Pa2 is a negative direction along the y-axis. The parking lot group P_{G1} is adjacent to the passage for vehicles Pa1 and the parking lot group P_{G2} is adjacent to the passage for vehicles Pa2.

In the example of FIG. 4B, after transition to the rescue mode, first, the control device 10 recognizes the passage for vehicles Pa. In the example of FIG. 4B, the control device 10 detects that the passage for vehicles Pa is two-way traffic and left-hand traffic. Specifically, the control device 10 detects that the traffic direction in the passage for vehicles Pa1 is the positive direction along the y-axis and the traffic direction in the passage for vehicles Pa2 is the negative direction along the y-axis. In addition, the control device 10 detects that the route for the vehicle adjacent to the parking lot PL1 which is the target parking position is the passage for vehicles Pa1. For example, on the basis of the parking facility information which is preliminarily stored in a memory, the control device 10 recognizes the passage for vehicles Pa and recognizes that the side of the passage for vehicles Pa adjacent to the target parking lot PL1 is the passage for vehicles Pa1. Additionally or alternatively, when the passage width is a width that allows vehicles to pass each other (e.g., 6 m or more) and the passage for vehicles is left-hand traffic, for example, in accordance with the traffic rules of the country, a determination may be made that the traffic direction in the passage for vehicles Pa1 is the positive direction along the y-axis and the traffic direction in the passage for vehicles Pa2 is the negative direction along the y-axis as in the example of FIG. 4B. Additionally or alternatively, the direction of the passage may be recognized by detecting an indication (arrow paint) that indicates the traffic direction on the road surface of the passage for vehicles Pa1.

Then, the control device 10 sets a rescue position P_{R} at a position on the passage for vehicles Pa that is a position at which the traveling direction of the vehicle V is approximately parallel to the traffic direction in the passage for vehicles Pa1 (the positive direction of the y-axis). The control device 10 generates a rescue route R_{R} from the current position of the vehicle V to the rescue position P_{R}. In the example of FIG. 4B, the control device 10 generates a route along which the vehicle V turns to the left side while moving forward and reaches a position of turn CR, a route along which the vehicle V moves backward from the position of turn CR to reach a given position, and a route along which the vehicle V approaches the passage for vehicles Pa1 side while moving backward from the given position. The vehicle V moves to the rescue position P_{R} by the drive control executed by the vehicle controller 70 and can thereby evacuate from the obstacle OB and the parking lot PL1. The direction when the vehicle V moves along the rescue route R_{R} to the rescue position P_{R} is the moving direction. The moving direction includes a traveling direction in which the vehicle V moves forward when the vehicle V completes moving along the rescue route R_{R} to the rescue position P_{R}. The moving direction also includes a traveling direction of the vehicle which exits the parking space and moves to the position of turn CR. In the example of FIG. 4B, the state in which the vehicle V makes a stop with its front part facing a direction along the traffic direction in the passage for vehicles Pa1 is indicated as a vehicle V'. This state is as a result of the vehicle V moving to the rescue position P_{R}.

In the example of FIG. 4B, the vehicle V is moved by the vehicle controller 70 to a location separated from the obstacle OB and the parking lot PL1 and makes a stop in a state in which the traveling direction is along the traffic direction in the passage for vehicles Pa1. This can prevent the vehicle V' from moving and making a stop in a state in which the traveling direction is opposite to the traffic direction in the passage for vehicles Pa2 and interfering with the traffic of the passage for vehicles Pa when moving and making a stop. Moreover, when the operator of the operation terminal 5 gets on and drives the vehicle V', the operator can drive the vehicle V' to move forward along the passage for vehicles Pa1 to the next available parking space without any operation such as a drive operation of changing the direction of the vehicle V'.

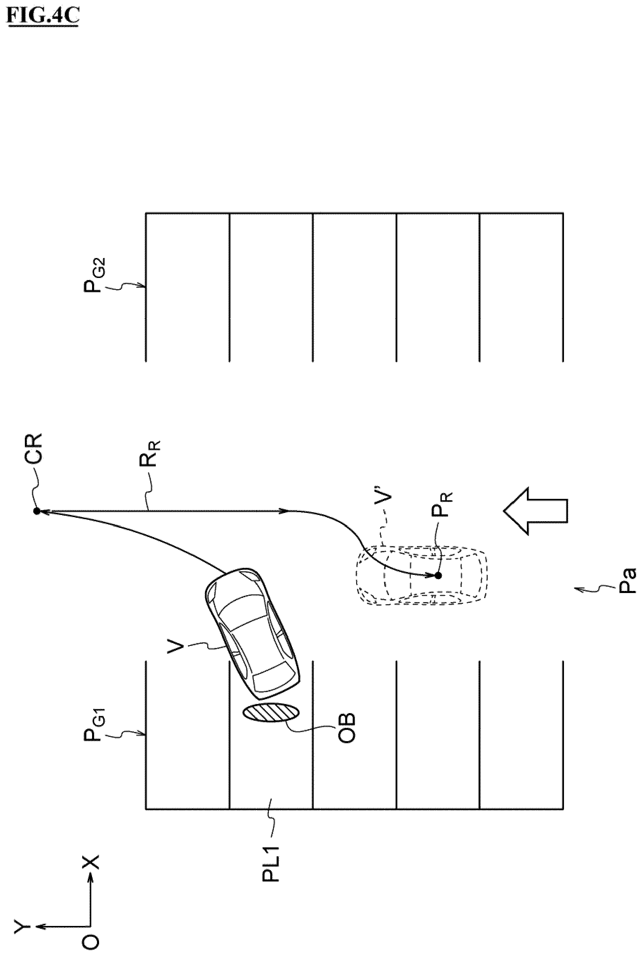

FIG. 4C illustrates a similar scene to the scene illustrated in FIG. 4A and the description is therefore borrowed herein with the same symbols as those in FIG. 4A. Another example of the operation in the rescue mode will be described with reference to FIG. 4C. Also in the example of FIG. 4C, as in the example of FIG. 4A, after transition to the rescue mode, first, the control device 10 recognizes the passage for vehicles Pa. The control device 10 detects that the passage for vehicles Pa is one-way traffic and that the traffic direction in the passage for vehicles Pa is the positive direction along the y-axis.

Then, the control device 10 sets a rescue position P_{R} at a position on the passage for vehicles Pa that is a position at which the traveling direction of the vehicle V is approximately parallel to the traffic direction in the passage for vehicles Pa (the positive direction of the y-axis). In this operation of the example of FIG. 4C, the control device 10 sets the rescue position P_{R} on the parking lot PL1 side in the width direction (x-direction) of the passage for vehicles Pa. The control device 10 generates a rescue route R_{R} from the current position of the vehicle V to the rescue position P_{R}. In the example of FIG. 4C, the control device 10 generates a route along which the vehicle V turns to the left side while moving forward and reaches a position of turn CR, a route along which the vehicle V moves backward from the position of turn CR to reach a given position, and a route along which the vehicle V approaches the parking lot PL1 side while moving backward from the given position. The vehicle V moves to the rescue position P_{R} by the drive control executed by the vehicle controller 70 and can thereby evacuate from the obstacle OB and the parking lot PL1. The direction when the vehicle V moves along the rescue route R_{R} to the rescue position P_{R} is the moving direction. The moving direction includes a traveling direction in which the vehicle V moves forward when the vehicle V completes moving along the rescue route R_{R} to the rescue position P_{R}. The moving direction also includes a traveling direction of the vehicle which exits the parking space and moves to the position of turn CR. In the example of FIG. 4C, the state in which the vehicle V makes a stop on the parking lot PL1 side in the width direction of the passage for vehicles Pa with the front part facing a direction along the traffic direction in the passage for vehicles Pa is indicated as a vehicle V'. This state is as a result of the vehicle V moving to the rescue position P_{R}.

In the example of FIG. 4C, the vehicle V is moved by the vehicle controller 70 to a location separated from the obstacle OB and the parking lot PL1 and makes a stop in a state in which the traveling direction is along the traffic direction in the passage for vehicles Pa. Moreover, the vehicle V makes a stop on the parking lot PL1 side, which is the initial target parking position, in the width direction of the passage for vehicles Pa. This allows the vehicle V to evacuate from the initial target parking position in a relatively short moving distance. The direction when the vehicle V moves along the rescue route R_{R} to the rescue position P_{R} is the moving direction. The moving direction includes a traveling direction in which the vehicle V moves forward when the vehicle V completes moving along the rescue route R_{R} to the rescue position P_{R}. The moving direction also includes a traveling direction of the vehicle which exits the parking space and moves to the position of turn CR. Furthermore, when the operator of the operation terminal 5 gets on and drives the vehicle V' at the rescue position P_{R}, the operator can drive the vehicle V' to move forward along the passage for vehicles Pa to the next available parking space without any operation such as a drive operation of changing the direction of the vehicle V'.

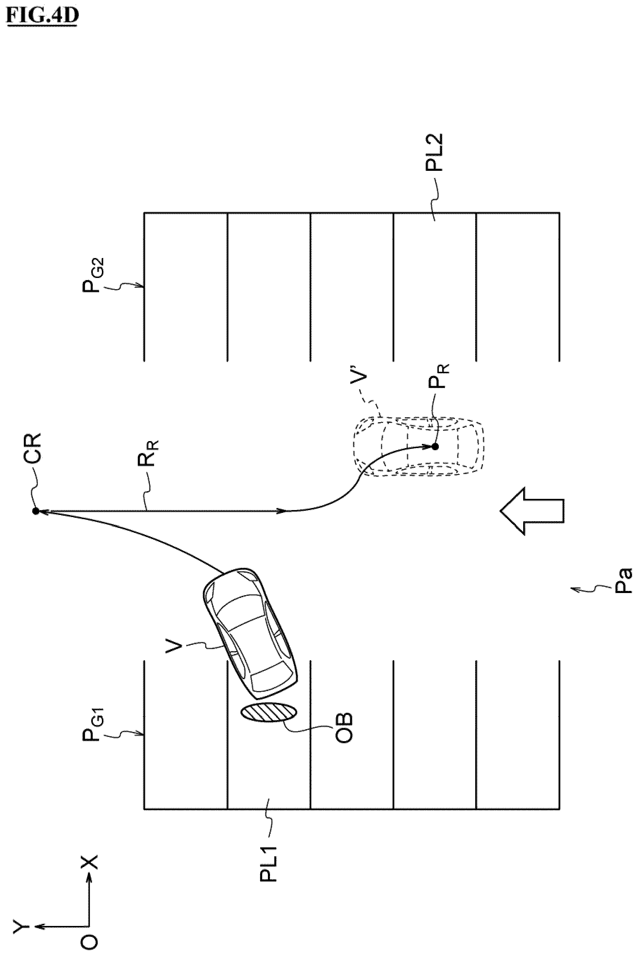

FIG. 4D illustrates a similar scene to the scene illustrated in FIG. 4A and the description is therefore borrowed herein with the same symbols as those in FIG. 4A. Another example of the operation in the rescue mode will be described with reference to FIG. 4D. Also in the example of FIG. 4D, as in the example of FIG. 4A, after transition to the rescue mode, first, the control device 10 recognizes the passage for vehicles Pa. The control device 10 detects that the passage for vehicles Pa is one-way traffic and that the traffic direction in the passage for vehicles Pa is the positive direction along the y-axis.

Then, the control device 10 sets a rescue position P_{R} at a position on the passage for vehicles Pa that is a position at which the traveling direction of the vehicle V is approximately parallel to the traffic direction in the passage for vehicles Pa (the positive direction of the y-axis). In this operation of the example of FIG. 4D, the control device 10 sets the rescue position P_{R} on a parking lot PL2 side, which is the next target parking position, in the width direction (x-direction) of the passage for vehicles Pa. The control device 10 generates a rescue route R_{R} from the current position of the vehicle V to the rescue position P_{R}. In the example of FIG. 4D, the control device 10 generates a route along which the vehicle V turns to the left side while moving forward and reaches a position of turn CR, a route along which the vehicle V moves backward from the position of turn CR to reach a given position, and a route along which the vehicle V approaches the parking lot PL2 side while moving backward from the given position. The vehicle V moves to the rescue position P_{R} by the drive control executed by the vehicle controller 70 and can thereby evacuate from the obstacle OB and the parking lot PL1. In the example of FIG. 4D, the state in which the vehicle V makes a stop on the parking lot PL2 side in the width direction of the passage for vehicles Pa with the front part facing a direction along the traffic direction in the passage for vehicles Pa is indicated as a vehicle V'. This state is as a result of the vehicle V moving to the rescue position P_{R}.

Here, the method of detecting the next target parking position will be described. For example, the control device 10 sets the next target parking position with reference to the execution result of the target parking frame setting process. When two or more available parking spaces are detected in the course of the target parking frame setting process, the control device 10 selects the next available parking space from among the available parking spaces which have not been selected as the recommended parking space. Then, the control device 10 sets the next target parking position on the basis of the next available parking space. When there are two or more available parking spaces as the above, the control device 10 sets the closest available parking space from the current position of the stopped vehicle, for example, as the next available parking space. Additionally or alternatively, for example, the controller 10 takes into account not only the current position but also the direction of the vehicle to set an available parking space with the shortest required time when parking as the next available parking space. The timing of detecting the next target parking position is not particularly limited and may be before the vehicle V detects the obstacle OB or may also be after the transition to the rescue mode.

In the example of FIG. 4D, the vehicle V is moved by the vehicle controller 70 to a location separated from the obstacle OB and the parking lot PL1 and makes a stop in a state in which the traveling direction is along the traffic direction in the passage for vehicles Pa. Moreover, the vehicle V makes a stop on the parking lot PL2 side, which is the next target parking position, in the width direction of the passage for vehicles Pa. This allows the vehicle V to make a stop at a position relatively close to the next target parking position, and the operator of the operation terminal 5 can therefore smoothly perform the next parking control by driving or a remote operation.

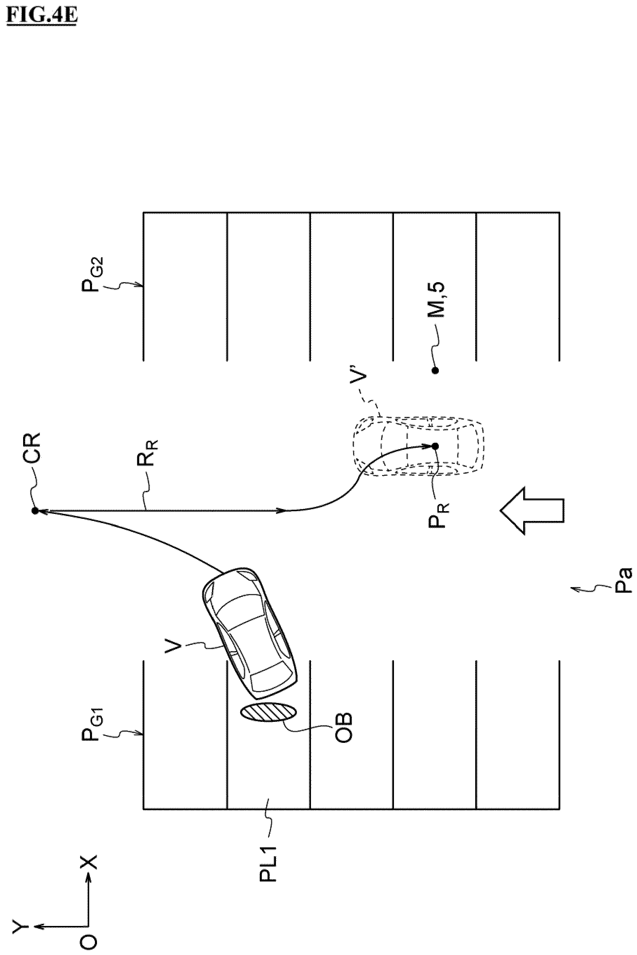

FIG. 4E illustrates a similar scene to the scene illustrated in FIG. 4A and the description is therefore borrowed herein with the same symbols as those in FIG. 4A. An example of another rescue operation will be described with reference to FIG. 4E. Also in the example of FIG. 4E, as in the example of FIG. 4A, after transition to the rescue mode, first, the control device 10 recognizes the passage for vehicles Pa. The control device 10 detects that the passage for vehicles Pa is one-way traffic and that the traffic direction in the passage for vehicles Pa is the positive direction along the y-axis.

Then, the control device 10 sets a rescue position P_{R} at a position on the passage for vehicles Pa that is a position at which the traveling direction of the vehicle V is approximately parallel to the traffic direction in the passage for vehicles Pa (the positive direction of the y-axis). In this operation of the example of FIG. 4E, the control device 10 sets the rescue position P_{R} on the side at which the operator M is located in the width direction (x-direction) of the passage for vehicles Pa. The control device 10 generates a rescue route R_{R} from the current position of the vehicle V to the rescue position P_{R}. In the example of FIG. 4E, the control device 10 generates a route along which the vehicle V turns to the left side while moving forward and reaches a position of turn CR, a route along which the vehicle V moves backward from the position of turn CR to reach a given position, and a route along which the vehicle V approaches the operator M side while moving backward from the given position. The vehicle V moves to the rescue position P_{R} by the drive control executed by the vehicle controller 70 and can thereby evacuate from the obstacle OB and the parking lot PL1. In the example of FIG. 4E, the state in which the vehicle V makes a stop on the operator M side in the width direction of the passage for vehicles Pa with the front part facing a direction along the traffic direction in the passage for vehicles Pa is indicated as a vehicle V'. This state is as a result of the vehicle V moving to the rescue position P_{R}.

The control device 10 uses any of the methods described with reference to FIG. 2A to FIG. 2C or a combination of such methods as the method of detecting the position of the operator M. The timing of detecting the operator M is not particularly limited and may be before the vehicle V detects the obstacle OB or may also be after the transition to the rescue mode.

In the example of FIG. 4E, the vehicle V is moved by the vehicle controller 70 to a location separated from the obstacle OB and the parking lot PL1 and makes a stop in a state in which the traveling direction is along the traffic direction in the passage for vehicles Pa. Moreover, the vehicle V makes a stop on the operator M side in the width direction of the passage for vehicles Pa. This allows the operator M to easily get on the vehicle V. Furthermore, the operator can drive the vehicle V' to move forward along the passage for vehicles Pa to the next available parking space without any operation such as a drive operation of changing the direction of the vehicle V'.

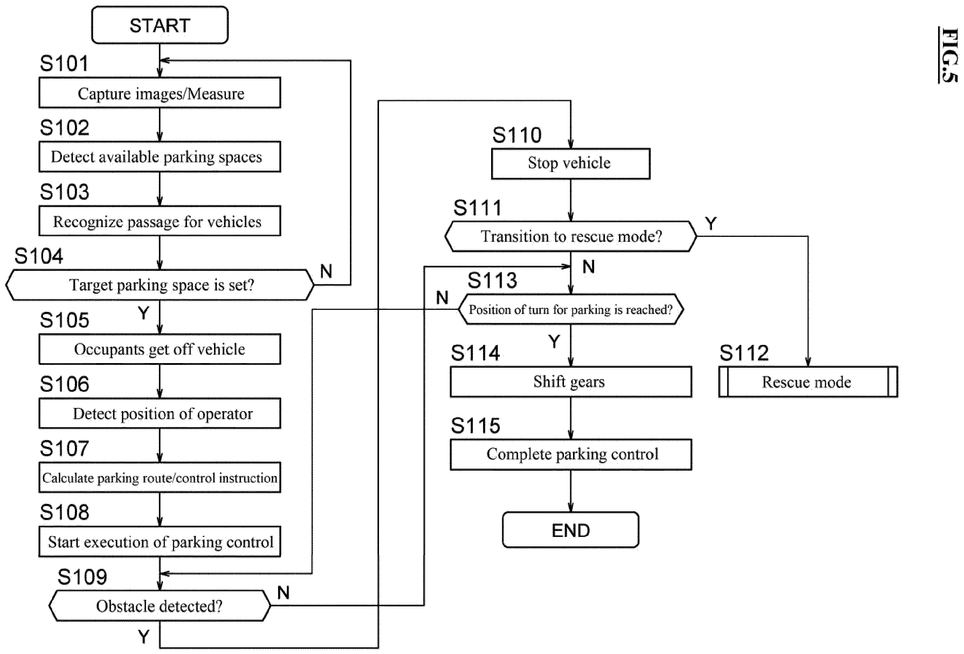

The control procedure of the parking control will be described below with reference to a flowchart illustrated in FIG. 5. FIG. 5 is a flowchart illustrating the control procedure of a parking control process executed by the parking control system 1000 according to one or more embodiments of the present invention. The start trigger for the parking control process is not particularly limited, and the parking control process may be triggered by operating a start switch of the parking control apparatus 100.

In step S101, the control device 10 of the parking control apparatus 100 acquires information around the vehicle. The control device 10 acquires, as needed, the ranging signals from the ranging devices 2 attached to multiple sites of the vehicle. Additionally or alternatively, the control device 10 acquires, as needed, images captured by the cameras 1a to 1d attached to multiple sites of the vehicle. Acquisition of the ranging signals from the ranging devices 2 and acquisition of the captured images from the set of cameras 1 may be selectively performed.

In step S102, the control device 10 detects available parking spaces. The control device 10 detects frames (areas) of parking spaces on the basis of the images captured by the cameras 1a to 1d. The control device 10 detects empty parking spaces using the detection data from the ranging devices 2 and/or the detection data extracted from the captured images. The control device 10 detects available parking spaces from among the parking spaces. The available parking spaces are parking spaces which are empty (i.e., other vehicles are not parked) and to which routes for completing the parking can be calculated. In one or more embodiments of the present invention, the condition that a parking route can be calculated means that a trajectory of the route from the current position to a target parking position can be rendered on the road surface coordinates without interfering with obstacles (including parked vehicles).

In step S103, the control device 10 recognizes the passage for vehicles. For example, the control device 10 can recognize the passage for vehicles provided in the parking facility, such as by acquiring information on parking facilities that is preliminarily stored in a memory such as the ROM 12 or accessing the information server 3 to acquire the parking lot information 134 stored in the storage device 132. Specifically, the control device 10 detects whether the passage for vehicles adjacent to the starting side is one-way or two-way traffic with respect to the available parking spaces detected in step S102. In the case of two-way traffic, the control device 10 detects which is the passage for vehicles adjacent to the available parking space. The control device 10 also detects the traffic direction in the passage for vehicles.

In step 104, the control device 10 transmits the available parking spaces to the operation terminal 5, controls the display 53 of the operation terminal 5 to display the available parking spaces, and requests the operator to input selection information of the target parking position for parking the vehicle. The target parking position may be automatically selected by the control device 10 or the parking facility side. When the operation command of specifying an available parking space is input to the operation terminal 5, the available parking space is set as the target parking position.

In one or more embodiments of the present invention, the operator performs a so-called remote parking process in which the operator gets off the vehicle and parks the vehicle from outside. In step S105, the operator of the operation terminal 5 and other occupants of the vehicle get off the vehicle. The operator who gets off the vehicle inputs operation information regarding the parking process to the operation terminal 5. The operation information includes at least a start instruction for the parking process. The operation information is transmitted to the control device 10.

In step S106, the control device 10 detects the position of the operator. The control device 10 detects the position of the operator, for example, by any of the methods described with reference to FIGS. 2A to 2C. For example, when detecting the operator from the captured images from the set of cameras 1 or the detection data from the ranging devices 2, the control device 10 detects the relative position of the operator with respect to the vehicle.

In step S107, the control device 10 calculates the parking route to the target parking position. The parking route includes a position of turn for parking required to move to the available parking space. For this calculation, the parking route is defined as a line and is also defined as a strip-shaped area corresponding to the occupied area by the vehicle based on the vehicle width. The occupied area by the vehicle is defined with consideration for the vehicle width and a margin width ensured for movement. The control device 10 generates a control instruction for moving the vehicle along the calculated parking route. The control device 10 controls the display 53 of the operation terminal 5 to display the parking route and encourages the operator to confirm it.

In step S108, the control device 10 starts execution of the parking control when the operator confirms the parking route and inputs the execution instruction to the operation terminal 5. This allows the vehicle to start moving along the parking route toward the target parking position.

In step S109, the control device 10 determines whether or not an obstacle is detected on or near the parking route. The control device 10 continuously acquires the captured images from the set of cameras 1 and/or the detection data from the ranging devices 2 to determine whether or not an obstacle exists around the vehicle. When an obstacle is detected, the process proceeds to step S110, while when no obstacle is detected, the process proceeds to step S113.

In step S110, the control device 10 controls the vehicle to make a stop in order to avoid contact between the vehicle and the obstacle. For example, the control device 10 acquires the distance from the vehicle to the obstacle detected in step S109 and calculates the deceleration for the target speed in accordance with the acquired distance. Then, the control device 10 forcibly reduces the target speed to stop the vehicle.

In step S111, the control device 10 controls the display 53 of the operation terminal 5 to present information that enables the transition to the rescue mode in order to allow the operator to select whether or not to transition to the rescue mode. For example, the display 53 displays information that the vehicle has stopped due to the detection of an obstacle and information that enables the transition to the rescue mode, and the operator can select the rescue mode and operate the enter button thereby to achieve the transition to the rescue mode. Transition to the rescue mode is followed by step S112, while no transition to the rescue mode is followed by step S113.

In step S112, the control device 10 starts control for making the vehicle stopped in step S110 leave the obstacle and the target parking position. The operation after the transition to the rescue mode will be described later.

On the other hand, when the parking route calculated in step S107 includes a position of turn for parking, the control device 10 makes a determination in step S113 as to whether or not the vehicle has reached the position of turn for parking. For example, the control device 10 makes the determination by comparing the current position of the vehicle with the position of turn for parking. When a determination is made that the vehicle has reached the position of turn for parking, the process proceeds to step S114, while when a determination is made that the vehicle has not reached the position of turn for parking, the process returns to step S109.

In step S114, the control device 10 executes a gear shift included in the control instruction. Thereafter, the control device 10 completes the parking control by continuously executing the control instruction in step S115. When the parking route calculated in step S107 does not include a position of turn for parking, steps S113 and S114 may be omitted.

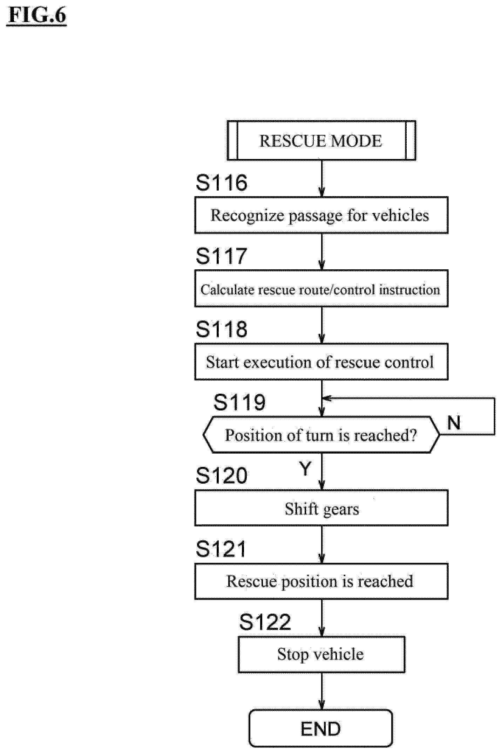

The control procedure in the rescue mode will then be described with reference to a flowchart illustrated in FIG. 6. When the execution of the rescue mode is determined by the operator in step S111 illustrated in FIG. 5, the control device 10 recognizes the passage for vehicles in step S116. The method of detecting the passage for vehicles may be the same method as the recognition method in step S103 illustrated in FIG. 5 or may also be a different method. In this step, the control device 10 recognizes the passage for vehicles adjacent to the direction of the vehicle exiting the target parking position which is set in step S104 illustrated in FIG. 5. Specifically, the control device 10 detects whether the passage for vehicles is one-way traffic or two-way traffic and detects the traffic direction in the passage for vehicles. In the case of two-way traffic, the control device 10 detects which is the passage for vehicles adjacent to the target parking position.

In step S117, the control device 10 calculates the moving direction of the vehicle. Specifically, on the basis of the traffic direction in the passage for vehicles, the control device 10 sets the rescue position and calculates the rescue route to the rescue position. First, the control device 10 sets the rescue position. For example, as in the example of FIG. 4A, the control device 10 sets the rescue position at a position on the passage for vehicles that is a position at which the traveling direction of the vehicle is approximately parallel to the traffic direction in the passage for vehicles. Additionally or alternatively, when the passage for vehicles is two-way traffic, as in the example of FIG. 4B, the control device 10 sets the rescue position at a position on the passage for vehicles that is a position at which the traveling direction of the vehicle is approximately parallel to the traffic direction in the passage for vehicles on the side adjacent to the target parking position. The passage for vehicles in this case is one of the passages for vehicles of two-way traffic. Additionally or alternatively, the control device 10 may adjust the rescue position in the width direction of the passage for vehicles. For example, as in the example of FIG. 4C, the control device 10 may set the rescue position on the initial target parking position side in the width direction of the passage for vehicles. Additionally or alternatively, for example, as in the example of FIG. 4D, the control device 10 may set the rescue position on the next target parking position side in the width direction of the passage for vehicles. Additionally or alternatively, for example, as in the example of FIG. 4E, the control device 10 may set the rescue position on the operator side in the width direction of the passage for vehicles.

Then, the control device 10 generates the rescue route from the current position to the set rescue position thereby to calculate the moving direction of the vehicle. In the example of FIG. 4A, the control device 10 calculates the rescue route R_{R} such that the vehicle makes a stop in a state in which the traveling direction is approximately parallel to the traffic direction in the passage for vehicles Pa.

In step S118, the control device 10 starts execution of the rescue control when the operator confirms the rescue route and inputs the execution instruction to the operation terminal 5. This allows the vehicle to start moving along the rescue route toward the rescue position.

When the rescue route calculated in step S118 includes a position of turn, the control device 10 makes a determination in step S119 as to whether or not the vehicle has reached the position of turn. When a determination is made that the vehicle has reached the position of turn, the process proceeds to step S120, in which the control device 10 executes a gear shift included in the control instruction. On the other hand, when a determination is made that the vehicle has not reached the position of turn, the process waits in step S119 until the vehicle reaches the position of turn.

When the vehicle reaches the rescue position along the rescue route in step S121, the control device 10 controls the vehicle to make a stop and concludes the parking control process in step S122.

As described above, the parking control method for a vehicle according to one or more embodiments of the present invention includes, when the parking control to the target parking position is suspended and the vehicle leaves the target parking position, calculating the rescue route on the basis of the traffic direction in a passage for vehicles adjacent to the target parking position and moving the vehicle along the rescue route. After moving along the rescue route, the vehicle makes a stop at a position that is determined by taking into account the traffic direction in the passage for vehicles. For example, the vehicle makes a stop in a state in which the traveling direction in the passage is approximately parallel to the traffic direction in the passage. This allows the operator of the operation terminal 5 to smoothly park the vehicle along the traffic direction in the passage by the remote operation or driving and it is therefore possible to prevent the operator of the operation terminal 5 from giving an instruction or the like for the next traveling direction and alleviate the burden imposed on the operator of the operation terminal 5.

In the parking control method for a vehicle according to one or more embodiments of the present invention, the rescue position is set at a position on the passage for vehicles that is a position at which the traveling direction of the vehicle in the passage for vehicles is approximately parallel to the traffic direction in the passage for vehicles. Then, the vehicle is moved along the rescue route ending at the rescue position. This can prevent the vehicle from interfering with the traffic, such as making a stop in a state in which the traveling direction is opposite to the traffic direction in the passage for vehicles.

In the parking control method for a vehicle according to one or more embodiments of the present invention, when the parking control to the target parking position is suspended and the vehicle leaves the target parking position, the rescue position is set on the target parking position side in the width direction of the passage for vehicles and the vehicle is moved along the rescue route ending at the rescue position. This allows the vehicle, which makes a stop near the target parking position, to move to the target parking position side in the width direction of the passage for vehicles, and the vehicle can therefore evacuate from the target parking position in a relatively short moving distance.

In the parking control method for a vehicle according to one or more embodiments of the present invention, when the parking control to the target parking position is suspended and the vehicle leaves the target parking position, the next target parking position is specified, the rescue position is set on the next target parking position side in the width direction of the passage for vehicles, and the vehicle is moved along the rescue route ending at the rescue position. This allows the vehicle, which makes a stop near the target parking position, to move to the next target parking position side in the width direction of the passage for vehicles, and the vehicle can therefore be smoothly parked at the next target parking position by the remote operation or driving.

In the parking control method for a vehicle according to one or more embodiments of the present invention, when the parking control to the target parking position is suspended and the vehicle leaves the target parking position, the position of the operator is detected, the rescue position is set on the side at which the operator is located in the width direction of the passage for vehicles, and the vehicle is moved along the rescue route ending at the rescue position. This allows the vehicle to make a stop at a position relatively close to the operator, and the operator can therefore get on the vehicle.

Embodiments heretofore explained are described to facilitate understanding of the present invention and are not described to limit the present invention. It is therefore intended that the elements disclosed in the above embodiments include all design changes and equivalents to fall within the technical scope of the present invention.

For example, the present invention has been described by exemplifying a method of detecting a white line or the like during the movement in the parking facility as the method of recognizing the passage for vehicles using the images captured by the set of cameras 1, but the present invention is not limited to this. For example, the control device 10 may detect parked vehicles from the images captured by the set of cameras 1 while the vehicle is moving in the parking facility and recognize the passage for vehicles from the arrangement of the parked vehicles. For example, the control device 10 may specify the passage for vehicles from the direction along the front parts or rear parts of a plurality of parked vehicles. This can improve the accuracy in specifying the passage for vehicles.

Moreover, for example, the present invention has been described by exemplifying a case in which the rescue position is set at a position at which the traveling direction is approximately parallel to the traffic direction in the passage for vehicles, but the present invention is not limited to this. For example, a scene in which the moving range of the vehicle is limited may be conceivable because the target parking position is located at a corner of the parking facility. In such a scene, the evacuation of the vehicle from the target parking position may be prioritized to set the rescue position such that the traveling direction is approximately parallel to the traffic direction in the passage for vehicles as much as possible, and the rescue position ending at the rescue position may be generated.

### [Description of Reference Numerals]

- 1000: Parking control system
- 100: Parking control apparatus
10 Control device
11 CPU
12 ROM
13 RAM
20 Input device
21 Communication device
211 Antennas
30 Output device
31 Display
- 1a-1d: Cameras
- 2: Ranging devices
- 3: Information server
131 Communication device
132 Storage device
133 Map information
134 Parking lot information
- 5: Operation terminal
51 Communication device
511 Antenna
52 Input device
53 Display
- 200: Onboard apparatus
40 Drive system
50 Steering angle sensor
60 Vehicle speed sensor
70 Vehicle controller
71 CPU
72 ROM
73 RAM

## Claims

1. A parking control method comprising:
performing parking control of moving a vehicle to a target parking position on a basis of an operation command acquired from an operator located outside the vehicle;
when the parking control to the target parking position is suspended and the vehicle leaves the target parking position, calculating a moving direction of the vehicle on a basis of a traffic direction in a passage for vehicles adjacent to the target parking position; and
moving the vehicle in the moving direction.

2. The parking control method according to claim 1, comprising
moving the vehicle so that a traveling direction of the vehicle in the passage is along the traffic direction.

3. The parking control method according to claim 1 or 2, comprising
moving the vehicle to the target parking position side in a width direction of the passage.

4. The parking control method according to any one of claims 1 to 3, comprising:
specifying a next target parking position; and
moving the vehicle to the next target parking position side in a width direction of the passage.

5. The parking control method according to any one of claims 1 to 4, comprising:
detecting a position of the operator; and
moving the vehicle to the operator side in a width direction of the passage.

6. A parking control apparatus comprising a control device configured to perform parking control of moving a vehicle to a target parking position on a basis of an operation command acquired from an operator located outside the vehicle,
the control device operating to:
when the parking control to the target parking position is suspended and the vehicle leaves the target parking position, calculate a moving direction of the vehicle on a basis of a traffic direction in a passage for vehicles adjacent to the target parking position; and
move the vehicle in the moving direction.
